# EUROPEAN PATENT APPLICATION

(11) **EP 0 981 032 A1**
(43) Date of publication of application: **23.02.2000**
(21) Application number: 99202565.0
(22) Date of filing: 05.08.1999
(51) Int. Cl.: F24H 9/18, F23D 14/78, F23D 14/58

(54) **Heat exchanger**

(30) Priority: 18.08.1998 NL 1009888
(71) Applicant: Zowel B.V., 5613 EA Eindhoven (NL)
(72) Inventor: Carpay, Joannes Marcus Theodora, 5611 SR Eindhoven (NL)
(74) Representative: Ferguson, Alexander

(57) **Abstract**

Heat exchanger with burner, provided with a longitudinal combustion chamber (1) bounded on both sides by a first (2) and a second (3) wall. The combustion chamber (1) has an entrance opening (4) and an exit opening (5). A fuel and an oxidant are supplied to the entrance opening (4) of the combustion chamber (1). A slit-shaped element (7) is provided for forming a first slit-shaped passage (8) having an outlet with the first wall (2) and for forming a second slit-shaped (9) passage having an outlet with the second wall (3). Each slit-shaped passage (8,9) has a length which is a part of the height of the wall concerned. Through the first (8) and the second (9) slit-shaped passages the mixed flow enters the combustion chamber (1) as first partial flow (10) and second partial flow (11), respectively. The first partial flow (10) and the second partial flow (11) are ignited. The distance between the first (2) and the second (3) wall decreases toward the exit opening of the combustion chamber (1) for directing the first (10) and the second (11) ignited partial flows to each other. A heat exchanger (13) unit with a chamber (14) is contiguous to the exit opening (5) of the combustion chamber (1) and has hollow walls (15,15') for containing cooling agent surrounding the chamber (14). The walls (2,3) of the combustion chamber (1) are an integrated part of the walls (15,15') of the heat exchanger unit (13).

## Description

The present invention relates to a heat exchanger with a burner and a heat exchanger unit.

Usually such a heat exchanger has a chamber which can be connected to the exit of the burner, for instance an ancillary burner, and hollow walls for containing a cooling agent surrounding the chamber. The burner introduces a heated mixture of a fuel and an oxidant, usually a mixture of a gas or compound of gasses and air or oxygen, into the chamber so that the cooling agent in the walls, for instance water, is heated and at the same time the heated mixture is cooled down.

It is an object of the present invention to provide a heat exchanger of high efficiency, the burner having a low emission, for instance a low NOx emission, and the structure of the heat exchanger also being simple and cheap.

To that end according to the present invention a heat exchanger is provided with a burner, provided with a longitudinal combustion chamber bounded on both sides by a first and a second wall, which combustion chamber has an entrance opening and an exit opening, a mixed flow of a fuel and an oxidant being supplied to the entrance opening of the combustion chamber, with a slit-shaped element for forming a first slit-shaped passage having an outlet with the first wall and for forming a second slit-shaped passage having an outlet with the second wall, each slit-shaped passage having a length which is a part of the height of the wall concerned, the outlets of the first and the second slit-shaped passages forming the entrance opening of the combustion chamber, the first partial flow and the second partial flow being ignited, the distance between the first and the second wall to the exit opening of the combustion chamber decreasing for directing the first and the second ignited partial flows to each other, and with a heat exchanger unit with a chamber contiguous to the exit opening of the combustion chamber and with hollow walls for containing cooling agent surrounding the chamber, the walls of the combustion chamber being an integrated part of the walls of the heat exchanger unit. In this way a heat exchanger with an integrated burner is provided, the cooling of the burner being included in the heating process of the cooling agent, which means that the burner is a part of the heated surface of the heat exchanger unit. This results in a low emission of flue gasses, in particular NOx.

Because furthermore each slit-shaped passage has a length which is part of the height of the wall concerned, en expansion is created after each slit-shaped passage. The first partial flow and the second partial flow enter the combustion chamber via the first and second slit-shaped passage, are ignited and stabilize on the wall concerned. As a result of the expansion of the slit-shaped passages to the combustion chamber and the fact that each ignited partial flow "sticks" to the wall concerned, an internal recirculation of flue gasses is created at the side of the slit-shaped element which is directed toward the exit opening. As a result of this internal recirculation and the cooling by the walls of the combustion chamber the temperature of the ignited partial flows is lowered, and thus the formation of nitrogen oxide is counteracted. On the other hand the temperature is sufficiently high to burn carbon monoxide so that the emission of the integrated burner is small. Moreover the partial flows are ignited in the combustion chamber and do not extend, at least not far, into the chamber of the heat exchanger unit, which also limits the formation of carbon monoxide. Moreover the internal recirculation ensures stabilisation of the ignition of the partial flows.

The integration of the heat exchanger and the burner also means that no separate burner has to be built or bought which has both logistic and financial advantages.

In a preferred embodiment of the heat exchanger according to the invention the first and second walls are curved. Because of this the ignited partial flows are gradually bent to the inside which limits the emission of carbon monoxide with a yet small overall dimension, while maintaining a good activity of the integrated burner. A further limitation of the emission is realised because the distance between the first and the second wall to the exit opening of the combustion chamber decreases such that the first and the second ignited partial flows unite.

Because of the internal recirculation an area is created at the side of the slit-shaped element which is directed toward the exit opening in which there is hardly flow in the mixture of fuel, oxidant and flue gasses. This "dead area" could cause disruptions in the activity of the burner. These disruptions are prevented in a further preferred embodiment of a heat exchanger according to the invention by providing the slit-shaped element with a radiation cooling element which decreases in cross-section, for instance triangularly shaped, the tip of the radiation cooling element being directed toward the exit opening. The radiation cooling element also ensures radiation cooling, and thus stabilisation of the ignited partial flows. Preferably the radiation cooling element is made of ceramic material.

In another preferred embodiment of a heat exchanger according to the present invention the slit-shaped element is hollow for containing cooling agent, which further increase the efficiency of the heat exchanger. Alternatively or additionally the slit-shaped element is hollow for containing fuel agent and is provided with outlet openings for introducing fuel agent into the slit-shaped passages. If so desired for a specific capacity or a specific combustion, the fuel can in this way be introduced in the possibly pre-mixed flow.

When in a heat exchanger according to the invention insulation means is present near the transition of the exit opening of the combustion chamber to the chamber of the heat exchanger, hardly any cooling takes place near this transition, which reduces the CO emission. Preferably the insulation material is made of ceramic.

The invention will be elucidated below by way of example on the basis of some exemplary embodiments referring to the accompanying drawings, in which:
Figure 1 shows a schematic view in cross-section of a heat exchanger with integrated burner according to the present invention,
Figure 2 shows a schematic side view of the heat exchanger with integrated burner according to the present invention, and
Figure 3 schematically shows the combustion chamber part of the heat exchanger according to figure 1 at an enlarged scale.

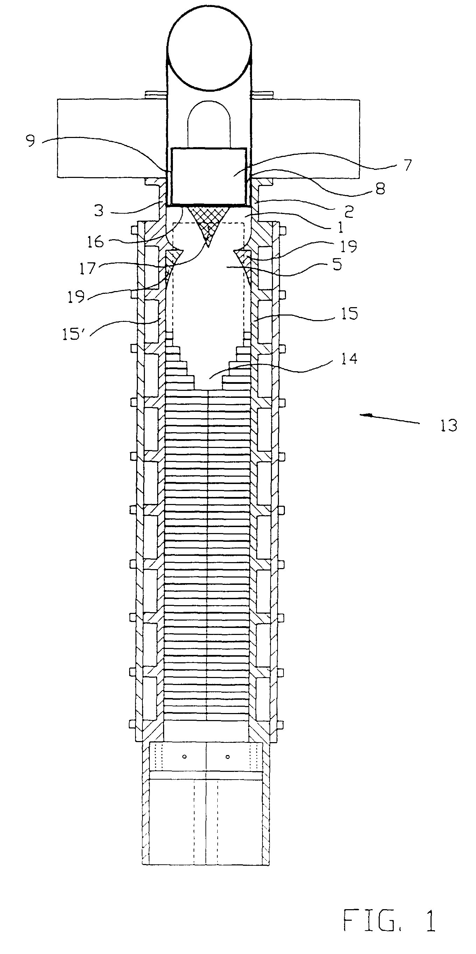

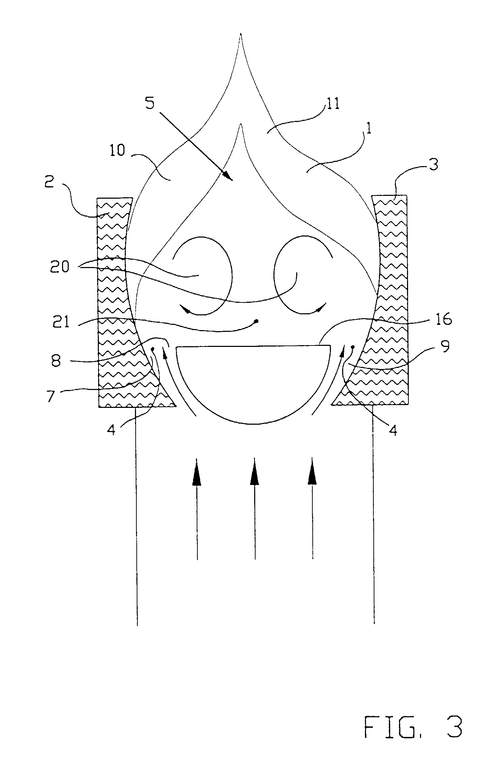

Figure 1 shows a schematic view in cross-section of a heat exchanger with integrated burner according to the present invention. The heat exchanger is provided with a longitudinal combustion chamber 1 bounded on both sides by a first 2 and a second 3 wall. The combustion chamber 1 (see also figure 3) has an entrance opening 4 and an exit opening 5. In the example shown the entrance opening 4 has a smaller cross-section than the exit opening 5, although the invention is not limited to that.

At the entrance opening 4 of the combustion chamber 1 for instance an at least partially mixed flow of a fuel and an oxidant is supplied, or only oxidant is supplied.

The heat exchanger further comprises a slit-shaped element 7, for instance centrally situated, for forming a first slit-shaped passage 8 having an outlet with the first wall 2 and for forming a second slit-shaped passage 9 having an outlet with the second wall 3. Each slit-shaped passage 8, 9 has a length which is a part of the height of the wall concerned 2 and 3, respectively, so that an expansion is created in the combustion chamber 1 near the exits of the slit-shaped passages 8, 9. The outlets of the first and the second slit-shaped passages form the entrance opening of the combustion chamber. The first partial flow 10 and the second partial flow 11, respectively, enter the combustion chamber 1 through the first 8 and second 9, respectively, slit-shaped passages, and as a result of the expansion a recirculation 20 of the flow in the combustion chamber 1 is created, as shown in detail in figure 3. A well defined expansion is realised for instance when the slit-shaped element 7 has a flat surface 16 directed toward the exit opening 5. Apart from a flat surface other shapes can be used, as long as an expansion is formed.

Furthermore the heat exchanger comprises an ignition means known per se and not further shown, for instance an electrode, for igniting the first partial flow 10 and for igniting the second partial flow 11.

The distance between the first 2 and the second 3 wall to the exit opening 5 of the combustion chamber 1 decreases for directing the first 10 and the second 11 ignited partial flows to each other. This limits the length of the ignited partial flow and thus among others the formation of carbon monoxide. Preferably the first and second walls 2, 3 are curved walls. In this way the ignited partial flows are gradually bent to the inside which limits the emission of carbon monoxide with a yet small overall dimension, while maintaining a good activity of the integrated burner. A further limitation of the emission is realised because the distance between the first and the second wall to the exit opening of the combustion chamber decreases such that the first and the second ignited partial flows unite.

A heat exchanger unit 13 with a, for instance central, chamber 14 is contiguous to the exit opening 5 of the combustion chamber 1 and has hollow walls 15, 15' for containing cooling agent, for instance water, although another agent for instance gaseous could also be used. The walls 15, 15' surround the chamber 14, so that the warm gasses flowing into the chamber 14 heat the walls and the cooling agent in there. The walls 2, 3 of the combustion chamber 1 are an integrated part of the walls 15, 15' of the heat exchanger unit 13, so that the heating process of the cooling agent already takes place in the combustion chamber, which ensures low emissions.

Because of the internal recirculation 20 an area 21 is created at the side of the slit-shaped element which is directed toward the exit opening in which there is hardly flow in the mixture of fuel, oxidant and flue gasses. This "dead area" could cause disruptions in the activity of the burner, which according to the invention are prevented because the slit-shaped element 7 is provided with a radiation cooling element 17 which decreases in cross-section, for instance triangularly shaped, the tip of the radiation cooling element 17 being directed toward the exit opening 5. Said radiation cooling element 17 also ensures radiation cooling, and thus stabilisation of the ignited partial flows, and moreover damping of the vibrations in the burner. Preferably the radiation cooling element is made of ceramic material.

In a preferred embodiment of the heat exchanger according to the present invention which is not shown, the slit-shaped element is hollow for containing a cooling agent, which further increase the efficiency of the heat exchanger. Alternatively or additionally the slit-shaped element can be hollow for containing a fuel agent and be provided with outlet openings for introducing fuel agent into the slit-shaped passages. If so desired for a specific capacity or a specific combustion, the fuel can in this way be introduced in the possibly pre-mixed flow. Moreover it is possible to supply only oxidant to the slit-shaped passages whereas the fuel is supplied to the oxidant through said slit-shaped element.

Insulation means 19 are present near the transition of the exit opening 5 of the combustion chamber 1 to the chamber 14 of the heat exchanger, as a result of which hardly any cooling takes place near this transition, which reduces the CO emission. Preferably the insulation means 19 is made of ceramic.

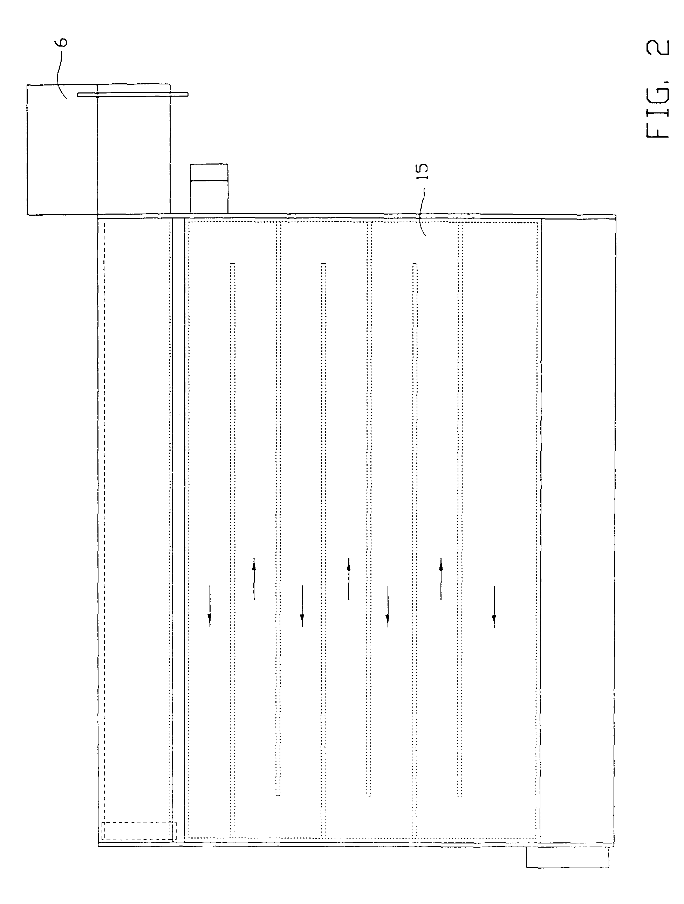

Figure 2 shows a schematic side view of a heat exchanger with integrated burner according to the present invention, the heat exchanger with integrated burner being designed in a line. The heat exchanger can in this way easily be upgraded for a larger capacity, without too many alterations being necessary. In figure 2 a possible course of the flow of the cooling agent is schematically shown with arrows. Apart form this line design other shapes are also possible, like the as it were "bending around" of the heat exchanger until the burner forms a circle or a part thereof.

## Claims

1. Heat exchanger with burner, provided with a longitudinal combustion chamber (1) bounded on both sides by a first (2) and a second (3) wall, which combustion chamber (1) has an entrance opening (4) and an exit opening (5), a mixed flow of a fuel and an oxidant being supplied to the entrance opening (4) of the combustion chamber (1), with a slit-shaped element (7) for forming a first slit-shaped passage (8) having an outlet with the first wall and for forming a second slit-shaped passage (9) having an outlet with the second wall (3), each slit-shaped passage (8, 9) having a length which is a part of the height of the wall concerned (2 and 3, respectively), the outlets of the first (8) and the second (9) slit-shaped passages forming the entrance opening (4) of the combustion chamber (1), the first partial flow (10) and the second partial flow (11) being ignited, the distance between the first (2) and the second (3) wall to the exit opening (5) of the combustion chamber (1) decreasing for directing the first (10) and the second (11) ignited partial flows to each other, and with a heat exchanger unit (13) with a chamber (14) contiguous to the exit opening (5) of the combustion chamber (1) and with hollow walls (15, 15') for containing cooling agent surrounding the chamber (14), the walls (2, 3) of the combustion chamber (1) being an integrated part of the walls (15, 15') of the heat exchanger unit (13).

2. Heat exchanger according to claim 1, **characterized in that** the first and second walls (2, 3) are curved walls.

3. Heat exchanger according to claim 1 or 2, **characterized in that** the distance between the first (2) and the second (3) wall to the exit opening (5) of the combustion chamber (1) decreases such that the first (10) and the second (11) ignited partial flows unite.

4. Heat exchanger according to claim 1, 2 or 3, **characterized in that** the slit-shaped element (7) has a flat surface (16) directed toward the exit opening (5).

5. Heat exchanger according to any one of the preceding claims, **characterized in that** the slit-shaped element (7) is provided with a radiation cooling element (17) which decreases in cross-section, the tip of the radiation cooling element (17) being directed toward the exit opening (5).

6. Heat exchanger according to claim 5, **characterized in that** the radiation cooling element (17) is made of ceramic material.

7. Heat exchanger according to any one of the preceding claims, **characterized in that** the slit-shaped element (7) is hollow for containing a cooling agent.

8. Heat exchanger according to any one of the preceding claims, **characterized in that** the slit-shaped element (7) is hollow for containing a fuel agent and is provided with outlet openings for inserting fuel agent into the slit-shaped passages (8, 9).

9. Heat exchanger according to any one of the preceding claims, **characterized in that** near the transition of the exit opening (5) of the combustion chamber (1) to the chamber (14) of the heat exchanger an insulation means (19) is present.

10. Heat exchanger according to claim 9, **characterized in that**, the insulation means (19) is ceramic.
